# EUROPÄISCHE PATENTSCHRIFT

(11) **EP 2 285 629 B1**
(45) Veröffentlichungstag und Bekanntmachung des Hinweises auf die Patenterteilung: **14.03.2012**
(21) Anmeldenummer: 09737810.3
(22) Anmeldetag: 14.04.2009
(51) Int. Cl.: B60R 25/00, G07C 9/00

(54) **VERFAHREN UND VORRICHTUNG ZUR BETÄTIGUNG EINER TÜR ODER KLAPPE EINES FAHRZEUGS**
METHOD AND DEVICE FOR ACTUATING A DOOR OR FLAP OF A VEHICLE
PROCÉDÉ ET DISPOSITIF D ACTIONNEMENT D UNE PORTE OU D UNE TRAPPE DE VÉHICULE

(30) Priorität: 29.04.2008 DE 102008021324
(43) Veröffentlichungstag der Anmeldung: 23.02.2011
(73) Patentinhaber: Volkswagen Aktiengesellschaft, 38436 Wolfsburg (DE); Audi AG, 85045 Ingolstadt (DE); Hella KGaA Hueck & Co., 59552 Lippstadt (DE)
(72) Erfinder: REIMANN, Martin, 59071 Hamm (DE); WEGHAUS, Ludger, 59556 Lippstadt (DE); MAIER, Ruben, 85049 Ingolstadt (DE); THIELE, Andreas, 38442 Wolfsburg (DE); ETTE, Bernd, 38442 Wolfsburg (DE)
(74) Vertreter: Banzer, Hans-Jörg
(86) Internationale Anmeldenummer: PCT/EP2009/002731
(87) Internationale Veröffentlichungsnummer: WO 2009/132766

(56) Entgegenhaltungen:
- EP-A- 0 770 749
- WO-A-01/81694

## Beschreibung

Die vorliegende Erfindung betrifft ein Verfahren und eine Vorrichtung, um eine Tür oder Klappe, insbesondere eine Heckklappe, eines Fahrzeugs berührungslos zu betätigen.

Die DE 10 2004 041 709 B3 offenbart ein Fahrzeug mit einer aufgrund eines Öffnungsbefehls automatisch öffnenden Klappe, wobei der Öffnungsbefehl ohne manuelle Betätigung eines Ent-/Verriegelungsmechanismus erfolgt.

Die DE 10 2006 015 930 A1 offenbart ein Verfahren zum automatischen Öffnen eines Elements eines Kraftfahrzeugs. Dabei wird das Element geöffnet, wenn ein tragbarer Codegeber zumindest eine zum automatischen Öffnen des Elements berechtigende vorgebbare Positionsänderung durchführt.

Die DE 103 61 115 A1 beschreibt ein Verfahren zur Fernbedienung von Türen und/oder Klappen von Fahrzeugen, bei dem eine Annäherung an das Fahrzeug und/oder die Position eines zugehörigen Authentikationselements detektiert wird. Die Kommunikation zur Öffnung einer Tür und/oder Klappe wird durch einen vorgegebenen manuellen Bedienungsvorrang vor der Annäherung an das Fahrzeug und/oder durch einen vorgegebenen Bewegungsablauf nach Erreichen des Fahrzeugs freigegeben.

Die DE 10 2006 037 237 A1 betrifft ein Verfahren zum Steuern von einer Tür eines Fahrzeugs. Dabei wird mit einer fahrzeugseitigen Bewegungserfassungseinrichtung ein Bewegungsmuster des mobilen Identifikationsgebers relativ zu dem Fahrzeug erfasst. Die Tür wird geöffnet, wenn ein vorbestimmtes Bewegungsmuster des authentifizierten mobilen Identifikationsgebers erkannt wurde.

Die EP 0 770 749 B1 offenbart ein System, welches prinzipiell einer Vorrichtung nach dem Oberbegriff des unabhängigen Vorrichtungsanspruchs entspricht.

Die EP 1 902 912 A1 offenbart ein Verfahren zum Öffnen einer Tür, einer Haube und/oder eines Deckels eines Kraftfahrzeugs, bei welchem durch Einbringen eines Gegenstands oder Körperteils in einen von einer Sensoranordnung überwachten Bereich des Außenbereichs des Kraftfahrzeugs Mittel zum Öffnen aktiviert werden.

Bei den meisten heute im Betrieb befindlichen Fahrzeugen ist es nahezu unmöglich, eine Tür oder eine Klappe eines Fahrzeugs ohne Hilfe zumindest einer Hand zu öffnen. Dies ist gerade dann, wenn keine Hand frei ist, da beispielsweise beide Hände zum Tragen einer Last benötigt werden, nachteilig.

Daher ist es die Aufgabe der vorliegenden Erfindung, ein Verfahren und eine Vorrichtung bereitzustellen, mit welchen eine Tür oder Klappe eines Fahrzeugs berührungslos betätigt werden kann. Dabei soll von der vorliegenden Erfindung zusätzlich berücksichtigt werden, dass Fehlauslösungen, d.h. ein nicht beabsichtigtes Öffnen oder Schließen, möglichst vermieden werden.

Erfindungsgemäß wird diese Aufgabe durch ein Verfahren zur Betätigung einer Tür oder Klappe eines Fahrzeugs nach Anspruch 1 oder 2, eine Vorrichtung zur Betätigung einer Tür oder Klappe eines Fahrzeugs nach Anspruch 7 oder 8 und ein Fahrzeug nach Anspruch 13 gelöst. Die abhängigen Ansprüche definieren bevorzugte und vorteilhafte Ausführungsformen der vorliegenden Erfindung.

Im Rahmen der vorliegenden Erfindung wird ein Verfahren zur Betätigung einer Tür oder Klappe, insbesondere einer Heckklappe, eines Fahrzeugs bereitgestellt, wodurch die Tür oder Klappe, wenn sie gerade geschlossen (wobei es unerheblich ist, ob das Fahrzeug entriegelt oder verriegelt ist) ist, automatisch geöffnet wird oder wodurch die Tür oder Klappe, wenn sie gerade geöffnet ist, automatisch geschlossen wird. Das Verfahren betätigt die Tür oder Klappe nur dann, wenn eine Bewegung eines Gegenstands außerhalb des Fahrzeugs erfasst wird und wenn diese Bewegung mindestens einen Richtungswechsel aufweist und wenn zusätzlich gleichzeitig ein dem Fahrzeug zugeordneter Schlüssel, insbesondere in einem Bereich in der Nähe der Tür oder der Klappe, erfasst wird. Unter dem dem Fahrzeug zugeordneten Schlüssel wird dabei insbesondere ein Schlüssel verstanden, mit welchem das Fahrzeug entriegelt und gestartet werden kann. Dies kann beispielsweise ein Schlüssel bzw. Funkchip für ein Keyless-Entry-System des Fahrzeugs sein.

Wenn es sich bei dem Gegenstand beispielsweise um einen Fuß handelt, kann ein Fahrer des Fahrzeugs die Tür oder Klappe des Fahrzeugs öffnen oder schließen, auch wenn er keine Hand frei hat, indem er mit seinem Fuß die entsprechende Bewegung, d.h. eine Fußgeste, ausführt, vorausgesetzt dass das Fahrzeug gleichzeitig den ihm zugeordneten Schlüssel erfasst, indem der Fahrer diesen Schlüssel beispielsweise bei sich trägt. Damit wird ein Fahrzeugzugang beim Be- und Entladen vereinfacht und erleichtert.

Da das Fahrzeug nur dann automatisch geschlossen oder geöffnet wird, wenn die erfasste Bewegung mindestens einen vorbestimmten Richtungswechsel aufweist, wird darüber hinaus eine Fehlbedienung, beispielsweise durch eine Katze oder einen Ball, welche sich in der Regel gleichförmig, also ohne einen Richtungswechsel, bewegen, im Wesentlichen vermieden. Unter einer Bewegung mit mindestens einem Richtungswechsel wird dabei insbesondere eine Bewegung verstanden, bei welcher sich der Gegenstand während der Bewegung aufeinanderfolgend in mindestens zwei Richtungen bewegt, wobei ein Richtungsvektor der einen Richtung mindestens einen Winkel von 90° zu einem Richtungsvektor einer anderen Richtung aufweist.

Die Bewegung des Gegenstands mit mindestens einem Richtungswechsel kann beispielsweise dann vorliegen, wenn der Gegenstand eine Hinbewegung bzw. eine erste Bewegung und anschließend innerhalb einer vorbestimmten Zeitspanne eine Rückbewegung bzw. eine zweite Bewegung ausführt, wobei die Hinbewegung eine der Rückbewegung im Wesentlichen entgegen gerichtete Bewegung ist. Aber auch wenn die zweite Bewegung quasi in einem rechten Winkel (oder größeren Winkel) zu der ersten Bewegung ausgeführt wird, liegt eine Bewegung mit mindestens einem Richtungswechsel im Sinn der vorliegenden Erfindung vor.

Dabei wird die Tür oder Klappe insbesondere nur dann automatisch geöffnet oder automatisch geschlossen, wenn der Schlüssel nach der Hinbewegung und vor der Rückbewegung erfasst wird.

Anders ausgedrückt wird, nachdem die Bewegung erfasst worden ist, nach einem Schlüssel, beispielsweise durch ein Keyless-Entry-System des Fahrzeugs, gesucht. Wird dabei kein Schlüssel in einer vorbestimmten Zeitspanne gefunden, wird die Tür oder die Klappe nicht angesteuert, auch wenn eine Rückbewegung stattfindet.

Es ist allerdings auch möglich, dass die Tür oder Klappe nur dann automatisch geöffnet oder automatisch geschlossen wird, wenn der Schlüssel nach der Hin- und Rückbewegung erfasst wird. Bei dieser Ausführungsform wird also erst nach der Rückbewegung, beispielsweise durch ein Keyless-Entry-System des Fahrzeugs, nach einem Schlüssel gesucht. Wie bei der anderen Ausführungsform wird die Tür oder die Klappe nicht angesteuert, wenn dabei in einer vorbestimmten Zeitspanne kein Schlüssel gefunden wird. Diese Ausführungsform weist gegenüber der vorherigen Ausführungsform, bei welcher der Schlüssel bereits vor der Rückbewegung gesucht wird, den Vorteil eines geringeren Leistungsverbrauchs auf, da ein Authentifizierungsvorgang (d.h. das Suchen nach dem Schlüssel) erst nach der vollständigen Bewegungserkennung (sowohl Hin- als auch Rückbewegung wurden erfasst) durchgeführt wird.

Beispielsweise zur Orientierung einer Bedienperson, kann nach der Erfassung der Hinbewegung bzw. nach der Erfassung der Rückbewegung (abhängig davon, welche der vorab beschriebenen Ausführungsformen eingesetzt wird) ein optischer und/oder ein akustischer Hinweis ausgegeben werden, wenn der Schlüssel erfasst worden ist.

Durch diesen optischen und/oder akustischen Hinweis wird der Bedienperson, beispielsweise dem Fahrer des Fahrzeugs, signalisiert, dass die Hinbewegung bzw. die Hin- und die Rückbewegung erfolgreich erfasst worden ist. Bei der oben beschriebenen Ausführungsform, bei welcher der Schlüssel bereits nach der Hinbewegung gesucht wird, wird der Bedienperson damit signalisiert, dass sie beispielsweise durch ein Zurückziehen des Fußes eine Betätigung der Tür oder Klappe veranlassen kann. Dieser Ablauf reduziert vorteilhafterweise die Wahrscheinlichkeit von Fehlauslösungen drastisch. Wird der Fuß innerhalb eines vordefinierten Zeitraums nicht zurückgezogen, so kehrt das erfindungsgemäße Verfahren in einen Ausgangszustand zurück und wartet erneut auf eine Hinbewegung.

Dabei wird die Tür oder Klappe erst dann automatisch geöffnet oder geschlossen, wenn eine Feldstärke, welche von einem von dem Schlüssel ausgesendeten Signal in dem Fahrzeug erzeugt wird, innerhalb einer vorbestimmten Zeitspanne nach dem Erfassen der Bewegung unter einen vorbestimmten Schwellenwert gefallen ist. Insbesondere muss dabei der Schlüssel während des gesamten Vorgangs (Öffnungsvorgangs oder Schließvorgangs) von dem Fahrzeug erfasst werden (d.h. die Feldstärke muss oberhalb einer Erkennungsschwelle liegen), da der Vorgang sonst abgebrochen wird.

Da die von dem Schlüssel in dem Fahrzeug erzeugte Feldstärke abnimmt, wenn sich der Schlüssel und damit der Fahrer, welcher in der Regel den Schlüssel bei sich trägt, von dem Fahrzeug entfernt, wird die Tür oder die Klappe erst dann geöffnet bzw. geschlossen, wenn sich der Fahrer vorteilhafterweise nicht mehr in einem Bereich um die Tür oder Klappe herum befindet. Diese Vorgehensweise reduziert vorteilhafterweise eine Stoßgefahr (beim automatischen Öffnen) bzw. eine Einklemmgefahr (beim automatischen Schließen) im Bereich der sich öffnenden bzw. schließenden Tür oder Klappe wesentlich.

Darüber hinaus ist es möglich, dass während des Schließvorgangs der Tür oder Klappe optische und/oder akustische Signale, z.B. eine Innenbeleuchtung und/oder eine Bremsleuchte oder ein über Lautsprecher ausgegebener Warnton beispielsweise zyklisch aktiviert wird, um auch unbeteiligte, beispielsweise Fußgänger, vor der sich öffnenden oder schließenden Tür oder Klappe zu warnen.

Im Rahmen der vorliegenden Erfindung wird auch eine Vorrichtung zur Betätigung einer Tür oder Klappe eines Fahrzeugs bereitgestellt. Dabei umfasst die Vorrichtung einen Mechanismus zur Betätigung, d.h. zum Öffnen oder Schließen, der Tür oder Klappe, mindestens zwei voneinander beabstandete Sensoranordnungen mit jeweils mindestens einem Sensor und Steuermittel. Die Steuermittel sind dabei derart ausgestaltet, dass die Steuermittel über den Mechanismus die Tür oder Klappe, wenn sie geschlossen ist, öffnet oder, wenn sie geöffnet ist, schließt, wenn über die mindestens zwei Sensoranordnungen eine Bewegung eines Gegenstands mit mindestens einem Richtungswechsel außerhalb des Fahrzeugs erfasst wird und wenn die Steuermittel gleichzeitig einen dem Fahrzeug zugeordneten Schlüssel erfassen.

Die Vorteile der erfindungsgemäßen Vorrichtung entsprechen im Wesentlichen den Vorteilen des erfindungsgemäßen Verfahrens, welche vorab im Detail erläutert wurden, weshalb hier auf eine Wiederholung verzichtet wird.

Gemäß einer erfindungsgemäßen Ausführungsform weist zumindest eine der mindestens zwei Sensoranordnungen eine längliche Form auf. Darüber hinaus sind mindestens zwei der Sensoranordnungen im Wesentlichen parallel zueinander angeordnet. Damit umfasst die vorliegende Erfindung auch eine Ausführungsform, bei welcher die Vorrichtung zwei Sensoranordnungen umfasst, welche jeweils eine längliche Form aufweisen und im Wesentlichen parallel zueinander angeordnet sind.

Dabei weist zumindest eine der Sensoranordnungen insbesondere eine Ausdehnung von 50 cm bis 120 cm auf. Ein Abstand zwischen zwei der Sensoranordnungen kann mindestens 5 cm und maximal 25 cm betragen. Ein Abstand zwischen jeder der mindestens zwei Sensoranordnungen und der Fahrbahn liegt dabei insbesondere in einem Bereich von 20 cm bis 60 cm. Damit umfasst die vorliegende Erfindung auch eine Ausführungsform, bei welcher die Vorrichtung zwei insbesondere längliche Sensoranordnungen mit jeweils einer Ausdehnung von 50 cm bis 120 cm aufweist. Ein Abstand zwischen diesen beiden im Wesentlichen parallel zueinander verlaufenden Sensoranordnungen beträgt dabei mindestens 5 cm und maximal 25 cm.

Wie vorab beschrieben ist, umfasst jede Sensoranordnung einen Sensor. Vom Typ her kann es sich bei diesem Sensor um einen Ultraschallsensor, einen Funkfrequenzsensor, einen optischen Sensor, einen thermischen Sensor oder einen kapazitiven Sensor handeln. Dabei ist es erfindungsgemäß auch möglich, dass zumindest eine der Sensoranordnungen mehr als einen Sensor umfasst. Eine Sensoranordnung, welche mehrere Sensoren umfasst, kann dabei Sensoren desselben Typs aber auch Sensoren unterschiedlicher Typen umfassen.

Gemäß einer bevorzugten erfindungsgemäßen Ausführungsform umfasst zumindest eine der Sensoranordnungen einen kapazitiven Sensor, welcher in der Form einer leitungsförmigen Elektrode mit einer Länge von mindestens 50 cm ausgebildet ist. Bei einer weiteren erfindungsgemäßen Ausführungsform umfassen zwei der Sensoranordnungen jeweils einen kapazitiven Sensor, wobei diese kapazitiven Sensoren in der Form einer leitungsförmigen Elektrode mit einer Länge von mindestens 50 cm ausgebildet sind.

Es sei explizit darauf hingewiesen, dass zwei oder mehrere voneinander beabstandete Sensoranordnungen mit jeweils mindestens einem Sensor von bestimmten Fachleuten erfindungsgemäß auch als ein Sensor aufgefasst werden kann, welcher zwei oder mehrere entsprechende voneinander beabstandete Elektroden aufweist.

Es sei darauf hingewiesen, dass im Rahmen der vorliegenden Erfindung unter einem Sensor auch eine Sensorfläche verstanden wird. Die erfindungsgemäße Vorrichtung kann demnach mindestens zwei Sensorflächen umfassen, welche die mindestens zwei voneinander beabstandeten Sensoranordnungen ausbilden, so dass jede Sensoranordnung mindestens eine Sensorfläche aufweist.

Gemäß einer erfindungsgemäßen Ausführungsform umfassen die Steuermittel eine Sensorauswerteeinheit, welche mit jedem Sensor elektrisch verbunden ist, so dass die Sensorauswerteeinheit mittels der Sensoren die Bewegung eines Gegenstands mit mindestens einem Richtungswechsel erfasst und den Mechanismus zur Bedienung der Tür oder Klappe entsprechend ansteuert.

Es ist erfindungsgemäß allerdings auch möglich, dass die Steuermittel pro Sensorfläche eine selbstständige Sensorauswerteeinheit umfassen, so dass jede Sensorfläche mit einer individuellen Sensorauswerteeinheit elektrisch verbunden ist. Diese Sensorauswerteeinheiten sind wiederum miteinander elektrisch verbunden, wobei sie entweder ein Master-Slave-System oder ein Multi-Master-System bilden. Bei einem Master-Slave-System übernimmt eine Sensorauswerteeinheit die Master-Funktion und die anderen Sensorauswerteeinheiten weisen nur eine Slave-Funktion auf. Dabei werden die Auswertefunktionen zur Erfassung der Bewegung eines Gegenstands mit mindestens einem Richtungswechsel und die Steuerfunktionen zur Ansteuerung des Mechanismus zur Bedienung der Tür oder Klappe jeweils nur von der oder von den mit einer Master-Funktion versehenen Sensorauswerteeinheiten realisiert, während die mit einer Slave-Funktion versehenen Sensorauswerteeinheiten nur die von ihrer Sensorfläche empfangenen Signale entsprechend an die Sensorauswerteeinheit mit Master-Funktion weiterleiten.

Vergleicht man eine Anordnung von Sensorauswerteeinheiten gemäß einem Master-Slave-System mit einer Anordnung von Sensorauswerteeinheiten gemäß einem Multi-Master-System, so weist das Multi-Master-System den Vorteil auf, dass alle Sensorauswerteeinheiten gleich aufgebaut sind, so dass beispielsweise eine Verwechslung bei der Montage der erfindungsgemäßen Vorrichtung nicht möglich ist.

Erfindungsgemäß ist es allerdings auch möglich, dass zumindest ein Teil der Auswerte- und Steuerfunktionen in einer oder in mehreren Kontrolleinheiten innerhalb des Fahrzeugs realisiert sind. Der Vorteil besteht darin, dass bereits im Fahrzeug vorhandene Kontrolleinheiten für die Auswertung der Sensorflächen und für die Steuerung des Mechanismus zur Bedienung der Tür oder Klappe mit verwendet werden können, so dass vorteilhafterweise für die erfindungsgemäße Vorrichtung keine eigene Kontrolleinheit eingesetzt oder verbaut werden muss. Bei einem Einsatz einer oder mehrerer Kontrolleinheiten reduziert sich die Funktion der Sensorauswerteeinheiten darauf, die von den Sensorflächen erhaltenen Signale eventuell entsprechend aufbereitet an die mindestens eine Kontrolleinheit weiterzuleiten. Wenn die Sensorauswerteeinheiten in einem Master-Slave-System realisiert sind, leiten die Sensorauswerteeinheiten mit der Slave-Funktion die von ihren Sensorflächen erhaltenen Signale an die Sensorauswerteeinheit mit der Master-Funktion weiter und diese sendet die Signale dann eventuell entsprechend aufbereitet an die mindestens eine Kontrolleinheit weiter.

Im Rahmen der vorliegenden Erfindung wird auch ein Fahrzeug bereitgestellt, welches eine erfindungsgemäße Vorrichtung, wie sie vorab beschrieben ist, umfasst.

Dabei erstrecken sich die mindestens zwei Sensoranordnungen im Wesentlichen mittig in der Breitenrichtung des Fahrzeugs im Heckbereich des Fahrzeugs. Die mindestens zwei Sensoranordnungen sind dabei im Wesentlichen parallel zu einer Fahrbahn und zu der Fahrbahn hin ausgerichtet.

Daher wird die erfindungsgemäße Vorrichtung betätigt, wenn ein Gegenstand, z.B. der Fuß des Fahrers, über der Fahrbahn im Heckbereich mit mindestens einem Richtungswechsel unter das Fahrzeug geführt wird, sofern dabei der entsprechende Schlüssel erfasst wird. Indem die mindestens zwei Sensoranordnungen erfindungsgemäß über einen relativ breiten Bereich im Wesentlichen mittig im Heckbereich des Fahrzeugs angeordnet sind, wird vorteilhafterweise eine intuitive Bedienung in der Fahrzeugmitte garantiert.

Dabei ist insbesondere eine erste der Sensoranordnungen in der Längsrichtung des Fahrzeugs vor einer Öffnung für eine Anhängerkupplung des Fahrzeugs angeordnet und eine zweite der Sensoranordnungen ist in der Längsrichtung hinter dieser Öffnung für die Anhängerkupplung angeordnet.

Die Sensoranordnungen sind dabei insbesondere derart mit einem am Heck des Fahrzeugs angebrachten im Wesentlichen aus Kunststoff bestehenden Fahrzeugteil integriert, dass die Sensoranordnungen derart in dem Kunststoff des Fahrzeugteils eingebettet sind, dass sie gegenüber einem Außenbereich vollständig durch den Kunststoff abgedeckt sind. Es ist aber auch möglich, dass die Sensoranordnungen im Inneren beispielsweise mittels Halterungen an dem Heckdiffusor befestigt sind. Die Sensoranordnungen, besser ihre Elektroden, können dabei jeweils flexibel, steif oder teilweise flexibel und teilweise steif ausgeführt sein. Dabei wird unter einer teilweise steif und teilweise flexibel ausgeführten Elektrode eine Elektrode verstanden, bei welcher bestimmte Abschnitte steif (also nur schwer zu biegen) und andere Abschnitte flexibel (also einfach zu biegen) ausgebildet sind.

Wenn die Sensoranordnungen gegenüber einem Außenbereich vollständig durch den Kunststoff abgedeckt sind, sind sie vorteilhafterweise vor Schmutz und Nässe geschützt und können von außen nahezu nicht wahrgenommen werden.

Die mindestens zwei Sensorflächen können dabei zur Betätigung einer Heckklappe wie folgt verbaut werden:
- am Stoßfänger des Fahrzeugs oder
- am Spoiler des Fahrzeugs oder
- am Diffusor des Fahrzeugs oder
- unterhalb des hinteren Endes der Fahrzeugkarosserie (z.B. unterhalb des Kofferraums oder des Laderaumbodens oder der Ersatzradmulde des Fahrzeugs)

Natürlich ist es auch möglich, dass die Sensorflächen verteilt auf Stoßfänger/Spoiler/Diffusor und unterhalb des hinteren Endes der Fahrzeugkarosserie installiert sind.

Zur Betätigung einer Seitentür können die mindestens zwei Sensorflächen wie folgt verbaut werden:
- an einem Seitenschweller oder an einer Schürze des Fahrzeugs oder
- unterhalb der Seite der Fahrzeugkarosserie

Dabei ist es auch möglich, dass die Sensorflächen verteilt auf Seitenschweller/Schürze und unterhalb der Seite der Fahrzeugkarosserie installiert sind.

Die vorliegende Erfindung ist insbesondere zur Betätigung einer Tür oder Klappe, beispielsweise einer Heckklappe, eines Fahrzeugs geeignet. Selbstverständlich ist die vorliegende Erfindung nicht auf diesen bevorzugten Anwendungsbereich beschränkt, sondern kann beispielsweise auch eingesetzt werden, um ein Fenster oder ein Schiebedach des Fahrzeugs zu betätigen. Darüber hinaus kann die vorliegende Erfindung auch bei Flugzeugen, Schiffen oder gleisgebundenen Fahrzeugen eingesetzt werden.

Die vorliegende Erfindung wird im Folgenden mit Bezug auf die Zeichnung anhand von erfindungsgemäßen Ausführungsformen im Detail beschrieben.

In Fig. 1 ist schematisch ein erfindungsgemäßes Fahrzeug mit einer erfindungsgemäßen Vorrichtung dargestellt.

Fig. 2 stellt zwei erfindungsgemäße Sensoranordnungen dar, welche in einem Heckdiffusor eines Fahrzeugs ausgebildet sind.

In Fig. 3 sind unterschiedliche erfindungsgemäße Anordnungen von zwei Sensorflächen an einem Heckstoßfänger dargestellt.

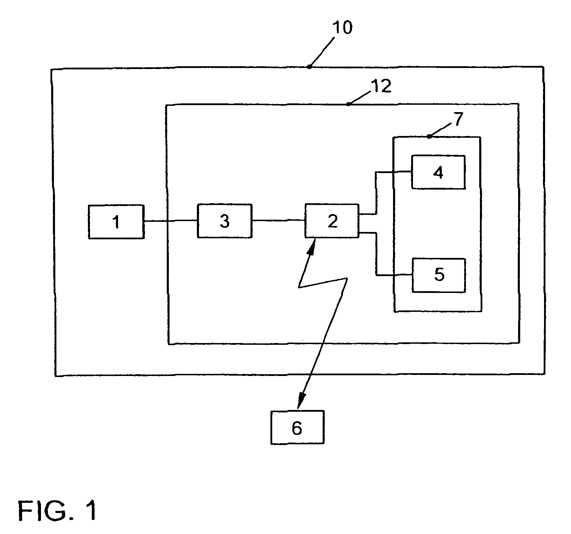

Ein in Fig. 1 dargestelltes erfindungsgemäßes Fahrzeug 10 umfasst eine erfindungsgemäße Vorrichtung 12, mit welcher eine Heckklappe 1 des Fahrzeugs 10 automatisch geöffnet werden kann. Dabei umfasst die erfindungsgemäße Vorrichtung 12 einen Mechanismus 3 zum Öffnen und Schließen der Heckklappe 1, ein Steuergerät 2, welches den Mechanismus 3 ansteuert und mit einer ersten kapazitiven Sensorelektrode 4 und mit einer zweiten kapazitiven Sensorelektrode 5 verbunden ist, welche beide in einen Heckdiffusor 7 oder hinteren Stossfänger des Fahrzeugs 10 integriert sind.

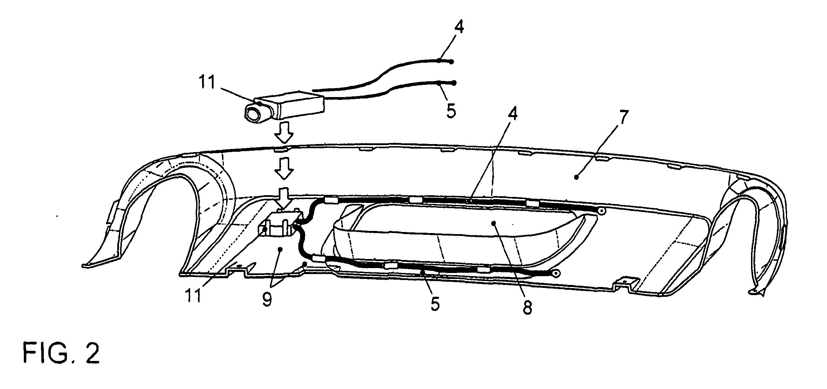

Dabei ist das Steuergerät 2 derart ausgestaltet, dass es mittels eines Sensorsteuergeräts 11 (siehe Fig. 2) und der beiden Sensorelektroden 4, 5 eine vorbestimmte Bewegung eines Gegenstands im mittleren Bereich des Fahrzeugs 10 unter dem Heckdiffusor 7 erfasst (wird mit Fig. 2 mit mehr Details beschrieben) und den Mechanismus 3 entsprechend ansteuert, wenn das Steuergerät 2 gleichzeitig einen Schlüssel 6 erfasst, um über den Mechanismus 3 die Heckklappe 1 zu öffnen oder zu schließen.

In Fig. 2 ist eine erste kapazitive Sensorelektrode 4 und eine zweite kapazitive Sensorelektrode 5, welche in dem Heckdiffusor 7 eines Fahrzeugs ausgebildet sind und auch als Satellitenleitungen bezeichnet werden, dargestellt. Dabei verläuft die erste kapazitive Sensorelektrode 4 in Fahrtrichtung hinter einer Öffnung 8 für eine Anhängerkupplung des Fahrzeugs und die zweite kapazitive Sensorelektrode 5 verläuft in Fahrtrichtung vor dieser Öffnung 8 für die Anhängerkupplung, wobei sich beide kapazitiven Sensorelektroden 4, 5 in der Breitenrichtung des Fahrzeugs auch neben dieser Öffnung erstrecken. Der Heckdiffusor bzw. Spoiler ist dabei in Fig. 2 mit einer herausnehmbaren Abdeckkappe für die Anhängerkupplung innerhalb der Öffnung 8 dargestellt. Dabei sind die beiden Elektroden 4, 5 insbesondere derart in den Heckdiffusor 7 integriert, dass sie vollständig von einem kohlenstofffaserverstärkten Kunststoff, aus welchem der Heckdiffusor ausgebildet ist, umgeben sind, so dass sie zum einen vor Schmutz, Nässe und Beschädigungen geschützt und zum anderen nicht sichtbar sind.

Sowohl mittels der ersten kapazitiven Sensorelektrode 4 als auch mittels der zweiten kapazitiven Sensorelektrode 5 wird eine Kapazität zwischen der jeweiligen Elektrode 4, 5 und der Fahrbahn gemessen. Sollte sich diese Kapazität verändern, beispielsweise indem ein Gegenstand zwischen die jeweilige Elektrode 4, 5 und die Fahrbahn gerät, wird diese Änderung der Kapazität für die jeweilige Elektrode 4, 5 durch das Sensorsteuergerät 11, in welchem die beiden Elektroden 4, 5 zusammenlaufen, erfasst. Dieses Sensorsteuergerät 11 hat eine Verbindung zum Bordnetz des Fahrzeugs 10 und damit auch zu dem Steuergerät 2, wodurch mittels der Elektroden 4, 5 erfasste Ergebnisse auch an das Steuergerät 2 gemeldet werden.

Aufgrund des Abstands der beiden Elektroden 4, 5 kann eine Bewegungsanalyse beispielsweise eines Fußes durchgeführt werden, welcher sich zwischen dem Heckdiffusor 7 und der Fahrbahn bewegt. Wenn eine Anhängerkupplung montiert ist, kann die erfindungsgemäße Funktion, bei dieser Ausführungsform das automatische Betätigen einer Heckklappe, initiiert werden, indem der Fahrer seinen Fuß links oder rechts neben der Anhängerkupplung unter dem Fahrzeug 10 hin und zurück führt, also eine Art Pendelbewegung mit dem Fuß ausführt. Wenn die Anhängerkupplung nicht montiert ist, ist eine intuitive Bedienung in der Fahrzeugmitte möglich, indem der Fahrer seinen Fuß mittig hinter dem Fahrzeug 10 unter dem Fahrzeug 10 hin und zurück führt bzw. dort die Pendelbewegung ausführt. Demnach ist es durch die parallel verlegten Elektroden 4, 5 möglich, eine einfache Tippbewegung zum Öffnen oder Schließen der Heckklappe durchzuführen, ohne dass von dem Fahrer eine komplizierte Bedienabfolge erforderlich ist.

Aufgrund der beiden parallel verlegten Elektroden 4, 5 bilden die zwei Elektroden 4, 5 ein kapazitives Sensorarray, wodurch der Bedienablauf in zwei Bewegungen mit jeweils unterschiedlicher Richtung unterteilt werden kann. Bei der ersten Bewegung (Hinbewegung) bewegt sich der Fuß unter dem Heckdiffusor 7 und bei der zweiten Bewegung (Rückbewegung) wird der Fuß von der Bedienperson zurückgezogen. Erkennt die erfindungsgemäße Vorrichtung 12 (siehe Fig. 2) über die kapazitiven Sensorelektroden 4, 5 die Hinbewegung, indem zuerst die erste kapazitive Sensorelektrode 4 und anschließend die zweite kapazitive Sensorelektroden 5 anspricht, so sucht die erfindungsgemäße Vorrichtung 12 über das Steuergerät 2 einen dem Fahrzeug 10 zugeordneten Schlüssel oder Funkchip 6, indem von einer Antenne, insbesondere im Heckbereich des Fahrzeugs 10, ein Funksignal ausgestrahlt wird. Befindet sich der Schlüssel 6 im Empfangsbereich der Antenne, sendet er seinerseits ein Funksignal aus, welches schließlich von dem Steuergerät 2 erfasst wird. In diesem Fall (Steuergerät 2 erfasst ein entsprechendes Funksignal von dem Schlüssel 6) kann die erfindungsgemäße Vorrichtung 12 über einen optischen und/oder akustischen Hinweis, beispielsweise mit Hilfe der dritten Bremsleuchte, der Bedienperson eine Rückmeldung geben. Die Bedienperson weiß somit, dass die Vorrichtung 12 die Hinbewegung erfolgreich erkannt hat und kann dann seinen Fuß zurückziehen, was zum Öffnen der Heckklappe führt. Diese Rückbewegung wird dabei derart durch die Elektroden erfasst, dass zuerst die zweite Elektrode 5 und anschließend die erste Elektrode 4 wieder die ursprüngliche Kapazität (die vor der Hinbewegung gemessene Kapazität) misst.

Wird nach einem Erfassen einer Hinbewegung von dem Steuergerät 2 kein dem Fahrzeug zugeordneter Schlüssel 6 erfasst, kehrt die Vorrichtung 12 in einen Zustand zurück, in welchem sie auf eine weitere Hinbewegung wartet. Diesen Zustand nimmt die erfindungsgemäße Vorrichtung 12 auch dann an, wenn das Fahrzeug 10 verriegelt ist. Wenn allerdings der Motor des Fahrzeugs 10 läuft oder wenn die Geschwindigkeit des Fahrzeugs über einem vorbestimmten Geschwindigkeitsschwellenwert liegt, verlässt die Vorrichtung 12 diesen Zustand, da es dann aus sicherheitstechnischen Erwägungen nicht möglich ist, die Heckklappe 1 durch die vorliegende Erfindung zu öffnen oder zu schließen. Dabei wird der Geschwindigkeitsschwellenwert insbesondere derart gewählt, dass durch ihn erfasst wird, wenn sich das Fahrzeug bewegt (also nicht stillsteht). Je nach Messgenauigkeit liegt dieser Geschwindigkeitsschwellenwert demnach insbesondere zwischen 0 und 3 km/h.

Bei einer bestimmten Ausführungsform ist die Vorrichtung 12 derart ausgestaltet, dass sie den Zustand, in welchem sie auf eine Hinbewegung wartet, verlässt, wenn das Fahrzeug über einen langen vorbestimmten Zeitraum (beispielsweise 72 Stunden) hinweg nicht entriegelt wurde, wobei die Vorrichtung 12 dann einen Zustand annimmt, in welchem die Heckklappe 1 über die Vorrichtung 12 nicht mehr betätigt werden kann. Mit dieser Ausführungsform soll verhindert werden, dass eine Batterie des Fahrzeugs 10 durch die erfindungsgemäße Vorrichtung 12 langsam entleert wird, wenn das Fahrzeug 10 über einen langen Zeitraum, beispielsweise während eines Urlaubs, abgestellt ist.

Das Schließen der Heckklappe 1 erfolgt analog zum oben beschriebenen Ablauf zum Öffnen der Heckklappe 1 mit dem Unterschied, dass ein optisches (z.B. über eine Innenbeleuchtung der Heckklappe 1) und/oder ein akustisches Signal (z.B. über einen Warnton über einen Lautsprecher im hinteren Bereich des Fahrzeugs oder mittels eines Summers in der Heckklappe 1) vor und/oder während des Schließvorgangs der Heckklappe 1 (zyklisch) aktiviert wird. Darüber hinaus schließt die Vorrichtung 12 die Heckklappe 1 nur dann, wenn über das Steuergerät 2 erfasst wird, dass innerhalb einer vorbestimmten Zeitspanne nach dem Erfassen der Rückbewegung eine Feldstärke, welche durch das von dem Schlüssel ausgesendete Funksignal in dem Fahrzeug 10 erzeugt wird, unter einen vorbestimmten Schwellenwert gefallen ist. Wenn dies der Fall ist, nimmt die Vorrichtung 12 an, dass sich der Fahrer des Fahrzeugs 10, welcher in der Regel den Schlüssel 6 bei sich trägt, aus dem Bereich der Heckklappe entfernt hat. Durch diese Vorgehensweise reduziert sich die Einklemmgefahr im Bereich der schließenden Heckklappe wesentlich, da die Bedienperson (sofern sie den Schlüssel bei sich trägt) erst von der Heckklappe 1 zurücktreten muss, bevor die Heckklappe 1 durch die Vorrichtung 12 geschlossen wird.

Anstelle der kapazitiven Sensorelektroden 4, 5 könnten im Rahmen der vorliegenden Erfindung auch Ultraschallsensoren eingesetzt werden. Damit allerdings von den Ultraschallsensoren ein ähnlicher breiter Erfassungsbereich (mehr als 50 cm) erfasst werden kann, müssen anstelle einer kapazitiven Sensorelektrode 4; 5 mehrere Ultraschallsensoren beispielsweise in Abständen von 5 cm angeordnet werden. Mit anderen Worten könnte die erste kapazitive Sensorelektrode 4 durch beispielsweise 11 Ultraschallsensoren ersetzt werden, welche dort an dem Heckdiffusor 7 angeordnet werden, wo sich bei der in Fig. 2 dargestellten Ausführungsform die erste Sensorelektrode 4 befindet. In ähnlicher Weise könnte die zweite kapazitive Sensorelektrode 5 durch weitere 11 Ultraschallsensoren ersetzt werden, welche ebenfalls dort an dem Heckdiffusor 7 angeordnet werden müssten, wo sich bei der in Fig. 2 dargestellten Ausführungsform die zweite Sensorelektrode 5 befindet.

Darüber hinaus ist es möglich, dass die erste bzw. zweite Sensoranordnung, welche gemäß der in Fig. 2 dargestellten Ausführungsform nur eine Sensorelektrode 4; 5 umfasst, mehrere kapazitive Sensorelektroden umfasst. Diese mehreren kapazitiven Sensorelektroden könnten in dem Bereich, in welchem gemäß der in Fig. 2 dargestellten Ausführungsform die erste bzw. zweite Sensorelektrode 4; 5 verläuft, nebeneinander angeordnet sein. Der Vorteil eines Einsatzes von mehreren kapazitiven Sensorelektroden für die erste und/oder zweite Sensoranordnung besteht darin, dass die Ergebnisse einer dieser mehreren Sensorelektroden, welche, da sie eng beieinander angeordnet sind, quasi denselben Bereich überwachen, durch eine oder mehrere andere Sensorelektroden derselben Sensoranordnung plausibilisiert werden könnten, so dass eine Wahrscheinlichkeit einer Fehlauslösung, aber auch eine Wahrscheinlichkeit einer nicht erfolgenden Auslösung trotz korrekt durchgeführter Fußbewegung seitens Fahrers weiter minimiert werden könnten.

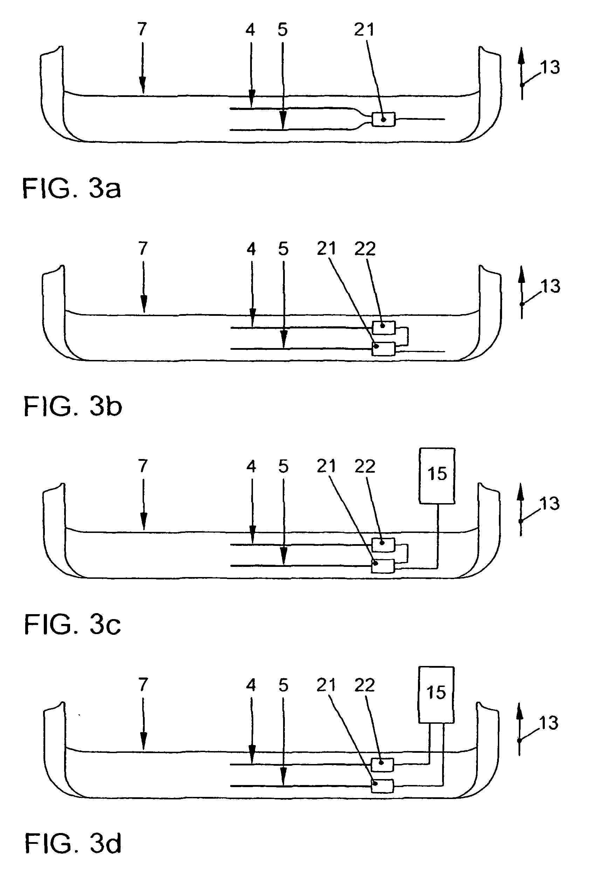

In Fig. 3 sind verschiedene Anordnungen von zwei Sensorflächen 4, 5 am Heckstoßfänger oder Heckdiffusor oder Heckspoiler 7 dargestellt.

In Fig. 3a sind die beiden Sensorflächen 4, 5 mit einer gemeinsamen Sensorauswerteeinheit 21 elektrisch verbunden. Diese Sensorauswerteeinheit wertet die von den beiden Sensorflächen 4, 5 erfassten Signale aus, um eine Bewegung eines Gegenstands mit mindestens einem Richtungswechsel zu erfassen, so dass abhängig davon und gegebenenfalls mit Hilfe eines weiteren Steuergeräts, welches überprüft, ob ein dem Fahrzeug zugeordneter Schlüssel erfasst wird, der Mechanismus zur Betätigung der Tür oder Klappe entsprechend angesteuert wird. Dabei ist in Fig. 3 mit dem Bezugszeichen 13 eine Fahrtrichtung angegeben.

In Fig. 3b sind die beiden Sensorflächen - 4, 5 jeweils mit einer eigenen Sensorauswerteeinheit 21, 22 elektrisch verbunden. Gemäß einer ersten Variante weist dabei die erste Sensorauswerteeinheit 21 eine Master-Funktion und die zweite Sensorauswerteeinheit 22 eine Slave-Funktion auf. Die zweite Sensorauswerteeinheit übermittelt dabei nur die von der ersten Sensorfläche 4 erfassten Signale in einer von der ersten Sensorauswerteeinheit 21 verarbeitbaren Form an die erste Sensorauswerteeinheit 21. Die erste Sensorauswerteeinheit 21 verknüpft die von der zweiten Sensorauswerteeinheit 22 erhaltenen Signale entsprechend mit den von der zweiten Sensorfläche 5 erfassten Signalen, um zu entscheiden, ob eine Bewegung eines Gegenstands mit mindestens einem Richtungswechsel vorliegt. Abhängig von den erfassten Signalen der beiden Sensorflächen 4, 5 wird dann beispielsweise mit Hilfe des weiteren Steuergeräts der Mechanismus zur Betätigung der Tür oder Klappe angesteuert.

Gemäß einer zweiten Variante weisen sowohl die erste Sensorauswerteeinheit 21 als auch die zweite Sensorauswerteeinheit 22 jeweils eine Master-Funktion auf, so dass ein Multi-Master-System realisiert ist. Dabei werten die beiden Sensorauswerteeinheiten 21, 22 die von den beiden Sensorflächen 4, 5 erfassten Signale aus, um zu entscheiden, ob eine Bewegung eines Gegenstands mit mindestens einem Richtungswechsel vorliegt, und steuern dann beispielsweise ebenfalls mit Hilfe eines weiteren Steuergeräts den Mechanismus zur Betätigung der Tür oder Klappe entsprechend an.

In Fig. 3c ist die erste Sensorauswerteeinheit 21 mit einer Kontrolleinheit 15 verbunden, in welcher eine Steuer- und Auswertefunktion implementiert ist, so dass der Mechanismus zur Betätigung der Tür oder Klappe gegebenenfalls mit der Unterstützung des weiteren Steuergeräts von der Kontrolleinheit 15 angesteuert wird.

Im Gegensatz zu der in Fig. 3c dargestellten Ausführungsform ist bei der in Fig. 3d dargestellten Ausführungsform jede der beiden Sensorauswerteeinheiten 21, 22 direkt elektrisch mit der Kontrolleinheit 15 verbunden.

Diese Kontrolleinheit ist dabei eine Kontrolleinheit, welche auch dann in dem Fahrzeug vorhanden ist, wenn die erfindungsgemäße Vorrichtung zur Betätigung der Tür oder Klappe nicht in dem Fahrzeug implementiert ist. Mit anderen Worten handelt es sich bei der Kontrolleinheit 15 um eine Einheit, mit welcher andere Funktionen des Fahrzeugs kontrolliert oder gesteuert werden und welche noch freie Rechenkapazitäten aufweist, um zusätzlich die erfindungsgemäßen Auswerte- und Steuerfunktionen zu übernehmen.

Im Rahmen der vorliegenden Erfindung gibt es verschiedene Möglichkeiten, die Auswerte- und Steuerfunktionen zur Auswertung der von den Sensorflächen 4, 5 erfassten Signale und zur Steuerung des Mechanismus zur Betätigung der Tür oder Klappe auf die Sensorauswerteeinheiten 21, 22 und die Kontrolleinheit 15 zu verteilen. Beispielsweise ist es möglich, dass die beiden Sensorauswerteeinheiten 21, 22 die von den beiden Sensorflächen 4, 5 erfassten Signale nur an die Kontrolleinheit 15 weiterleiten, so dass die gesamte Auswertung und Steuerung in der Kontrolleinheit 15 implementiert ist. Alternativ ist es erfindungsgemäß möglich, dass die beiden Sensorauswerteeinheiten 21, 22 bereits eine Auswertung der von den Sensorflächen 4, 5 erfassten Signale vornehmen und eine Ansteuerung des Mechanismus zur Betätigung der Tür oder Klappe zumindest vorbereiten, so dass in der Kontrolleinheit 15 nur noch ein geringer Anteil der Steuerfunktion implementiert ist.

### BEZUGSZEICHENLISTE

- 1: Heckklappe
- 2: Steuergerät
- 3: Mechanismus
- 4: Sensorelektrode
- 5: Sensorelektrode
- 6: Schlüssel
- 7: Heckdiffusor
- 8: Öffnung für Anhängerkupplung
- 9: Befestigungspunkt
- 10: Kraftfahrzeug
- 11: Sensorsteuergerät
- 12: Vorrichtung
- 13: Fahrtrichtung
- 15: Kontrolleinheit
- 21: Sensorauswerteeinheit
- 22: Sensorauswerteeinheit

## Patentansprüche

1. Verfahren zur Betätigung einer Tür oder einer Klappe eines Fahrzeugs, wobei
die Tür oder Klappe (1), wenn sie geschlossen ist, automatisch geöffnet wird oder dass die Tür oder Klappe (1), wenn sie geöffnet ist, automatisch geschlossen wird, wenn
• eine Bewegung eines Gegenstands mit mindestens einem Richtungswechsel außerhalb des Fahrzeugs (10) erfasst wird, und
• gleichzeitig ein dem Fahrzeug (10) zugeordneter Schlüssel (6) erfasst wird,
und das Verfahren **dadurch gekennzeichnet, ist**
**dass** die Tür oder Klappe (1) erst dann automatisch geöffnet wird, wenn eine Feldstärke, welche von einem von dem Schlüssel (6) ausgesendeten Signal in dem Fahrzeug (10) erzeugt wird, innerhalb einer vorbestimmten Zeitspanne nach dem Erfassen der Bewegung unter einen vorbestimmten Schwellenwert gefallen ist.

2. Verfahren zur Betätigung einer Tür oder einer Klappe eines Fahrzeugs, wobei
die Tür oder Klappe (1), wenn sie geschlossen ist, automatisch geöffnet wird oder dass die Tür oder Klappe (1), wenn sie geöffnet ist, automatisch geschlossen wird, wenn
• eine Bewegung eines Gegenstands mit mindestens einem Richtungswechsel außerhalb des Fahrzeugs (10) erfasst wird, und
• gleichzeitig ein dem Fahrzeug (10) zugeordneter Schlüssel (6) erfasst wird,
und das Verfahren **dadurch gekennzeichnet ist,**
**dass** die Tür oder Klappe (1) erst dann automatisch geschlossen wird, wenn eine Feldstärke, welche von einem von dem Schlüssel (6) ausgesendeten Signal in dem Fahrzeug (10) erzeugt wird, innerhalb einer vorbestimmten Zeitspanne nach dem Erfassen der Bewegung unter einen vorbestimmten Schwellenwert gefallen ist.

3. Verfahren nach Anspruch 1 oder 2, **dadurch gekennzeichnet, dass** die Bewegung erfasst wird, wenn eine erste Bewegung des Gegenstands und anschließend innerhalb einer vorbestimmten Zeitspanne eine zweite Bewegung des Gegenstands erfasst wird, wobei die erste Bewegung und die zweite Bewegung im Wesentlichen zueinander entgegengerichtet sind.

4. Verfahren nach Anspruch 3, **dadurch gekennzeichnet, dass** die Tür oder Klappe (1) nur dann automatisch geöffnet oder geschlossen wird, wenn nach der Hinbewegung und vor der Rückbewegung der Schlüssel (6) erfasst wird.

5. Verfahren nach Anspruch 3 oder 4, **dadurch gekennzeichnet, dass** nach der Hinbewegung ein optischer und/oder ein akustischer Hinweis ausgegeben wird, wenn der Schlüssel (6) erfasst wird.

6. Verfahren nach Anspruch 3, **dadurch gekennzeichnet, dass** die Tür oder Klappe (1) nur dann automatisch geöffnet oder geschlossen wird, wenn nach der Hin-und Rückbewegung der Schlüssel (6) erfasst wird.

7. Vorrichtung zur Betätigung einer Tür oder Klappe eines Fahrzeugs, wobei
die Vorrichtung (12) einen Mechanismus (3) zur Betätigung der Tür oder Klappe (1), mindestens zwei voneinander beabstandete Sensoranordnungen mit jeweils mindestens einem Sensor (4; 5) und Steuermittel (2; 21; 21, 22; 21, 22, 15) umfasst,
dass die Steuermittel (2; 21; 21, 22; 21, 22, 15) derart ausgestaltet sind, dass die Steuermittel (2; 21; 21, 22; 21, 22, 15) mittels des Mechanismus (3) die Tür oder Klappe (1), wenn sie geschlossen ist, öffnen, oder, wenn sie geöffnet ist, schließen, wenn über die zwei Sensoranordnungen (4, 5) eine Bewegung eines Gegenstands mit mindestens einem Richtungswechsel außerhalb des Fahrzeugs (10) erfasst wird und die Steuermittel (2; 21; 21, 22; 21, 22, 15) gleichzeitig einen dem Fahrzeug (10) zugeordneten Schlüssel (6) erfassen, und die Vorrichtung **dadurch gekennzeichnet ist,**
**dass** die Vorrichtung (12) derart ausgestaltet ist, dass die Vorrichtung (12) die Tür oder Klappe (1) erst dann automatisch öffnet, wenn die Steuermittel (2) erfassen, dass eine Feldstärke, welche von einem von dem Schlüssel (6) ausgesendeten Signal in dem Fahrzeug (10) erzeugt wird, innerhalb einer vorbestimmten Zeitspanne nach dem Erfassen der Bewegung unter einen vorbestimmten Schwellenwert gefallen ist.

8. Vorrichtung zur Betätigung einer Tür oder Klappe eines Fahrzeugs,
die Vorrichtung (12) einen Mechanismus (3) zur Betätigung der Tür oder Klappe (1), mindestens zwei voneinander beabstandete Sensoranordnungen mit jeweils mindestens einem Sensor (4; 5) und Steuermittel (2; 21; 21, 22; 21, 22, 15) umfasst,
dass die Steuermittel (2; 21; 21, 22; 21, 22, 15) derart ausgestaltet sind, dass die Steuermittel (2; 21; 21, 22; 21, 22, 15) mittels des Mechanismus (3) die Tür oder Klappe (1), wenn sie geschlossen ist, öffnen, oder, wenn sie geöffnet ist, schließen, wenn über die zwei Sensoranordnungen (4, 5) eine Bewegung eines Gegenstands mit mindestens einem Richtungswechsel außerhalb des Fahrzeugs (10) erfasst wird und die Steuermittel (2; 21; 21, 22; 21, 22, 15) gleichzeitig einen dem Fahrzeug (10) zugeordneten Schlüssel (6) erfassen, und die Vorrichtung **dadurch gekennzeichnet ist,**
**dass** die Vorrichtung (12) derart ausgestaltet ist, dass die Vorrichtung (12) die Tür zur oder Klappe (1) erst dann automatisch schließt, wenn die Steuermittel (2) erfassen, dass eine Feldstärke, welche von einem von dem Schlüssel (6) ausgesendeten Signal in dem Fahrzeug (10) erzeugt wird, innerhalb einer vorbestimmten Zeitspanne nach dem Erfassen der Bewegung unter einen vorbestimmten Schwellenwert gefallen ist.

9. Vorrichtung nach Anspruch 7 oder 8,
**dadurch gekennzeichnet,**
**dass** von den mindestens zwei Sensoranordnungen (4, 5) mindestens eine eine längliche Form aufweist, und
**dass** von den mindestens zwei Sensoranordnungen zumindest zwei Sensoranordnungen (4, 5) im Wesentlichen parallel zueinander angeordnet sind.

10. Vorrichtung nach einem der Ansprüche 7-9,
**dadurch gekennzeichnet,**
**dass** die Steuermittel eine erste Sensorauswerteeinheit (21) und mindestens eine zweite Sensorauswerteeinheit (22) umfassen,
**dass** die erste Sensorauswerteeinheit (21) mit einem Sensor (5) der mindestens zwei Sensoren elektrisch verbunden ist,
**dass** jede der mindestens einen zweiten Sensorauswerteeinheit (22) mit jeweils einem Sensor (4) der anderen der mindestens zwei Sensoren elektrisch verbunden ist,
**dass** jede der mindestens einen zweiten Sensorauswerteeinheit (22) mit der ersten Sensorauswerteeinheit (21) elektrisch verbunden ist, und
**dass** die erste Sensorauswerteeinheit (21) eine Master-Funktion und die mindestens eine zweite Sensorauswerteeinheit (22) eine Slave-Funktion aufweist.

11. Vorrichtung nach einem der Ansprüche 7-10,
**dadurch gekennzeichnet,**
**dass** die Steuermittel eine erste Sensorauswerteeinheit (21) und eine zweite Sensorauswerteeinheit (22) umfassen,
**dass** die erste Sensorauswerteeinheit (21) mit einer Sensoranordnung (5) der zwei Sensoranordnungen elektrisch verbunden ist,
**dass** die zweite Sensorauswerteeinheit (22) mit der anderen Sensoranordnung (4) der zwei Sensoranordnungen elektrisch verbunden ist,
**dass** die erste Sensorauswerteeinheit (21) und die zweite Sensorauswerteeinheit (22) miteinander elektrisch verbunden sind, und
**dass** die erste Sensorauswerteeinheit (21) und die zweite Sensorauswerteeinheit (22) gleichberechtigt jeweils eine Master-Funktion aufweisen.

12. Vorrichtung nach Anspruch 10 oder 11, **dadurch gekennzeichnet, dass** die Steuermittel mindestens eine Kontrolleinheit (15) umfassen, welche eine Auswertefunktion zur Auswertung der mindestens zwei Sensoren (4, 5) und eine Steuerfunktion zur Ansteuerung des Mechanismus (3) umfasst, und dass jede Sensorauswerteeinheit (21; 21, 22), welche eine Master-Funktion ausweist, elektrisch mit der mindestens einen Kontrolleinheit (15) verbunden ist.

13. Fahrzeug mit einer Vorrichtung (12) nach einem der Ansprüche 7-12.

14. Fahrzeug nach Anspruch 13, **dadurch gekennzeichnet, dass** sich die mindestens zwei Sensoranordnungen (4; 5) im Wesentlichen in der Breitenrichtung des Fahrzeugs (10) mittig im Heckbereich des Fahrzeugs (10) erstrecken, und dass die mindestens zwei Sensoranordnungen (4, 5) im Wesentlichen parallel zu einer Fahrbahn und zu der Fahrbahn hin ausgerichtet sind.

15. Fahrzeug nach Anspruch 13 oder 14, **dadurch gekennzeichnet, dass** eine (4) der mindestens zwei Sensoranordnungen in Längsrichtung des Fahrzeugs (10) vor einer Öffnung (8) für eine Anhängerkupplung des Fahrzeugs (10) verläuft und dass eine weitere (5) der mindestens zwei Sensoranordnungen in Längsrichtung hinter der Öffnung (8) für die Anhängerkupplung verläuft.

## Claims

1. Method for actuating a door or a hatch of a vehicle,
the door or hatch (1), when it is closed, being automatically opened, or the door or hatch (1), when it is open, being automatically closed, if
- a movement of an object having at least one direction change outside the vehicle (10) is detected, and
- a key (6) assigned to the vehicle (10) is detected simultaneously,
and the method is **characterized in that** the door or hatch (1) is only automatically opened if a field strength which is generated by a signal emitted from the key (6) in the vehicle (10) has fallen below a predetermined threshold value within a predetermined time span after the detection of the movement.

2. Method for actuating a door or a hatch of a vehicle,
the door or hatch (1), when it is closed being automatically opened, or the door or hatch (1), when it is open, being automatically closed, if
- a movement of an object having at least one direction change outside the vehicle (10) is detected, and
- a key (6) assigned to the vehicle (10) is detected simultaneously,
and the method is **characterized in that** the door or hatch (1) is only automatically closed if a field strength which is generated by a signal emitted from the key (6) in the vehicle (10) has fallen below a predetermined threshold value within a predetermined time span after the detection of the movement.

3. Method according to Claim 1 or 2, **characterized in that** the movement is detected if a first movement of the object and subsequently, within a predetermined time span, a second movement of the object are detected, the first movement and the second movement being oriented essentially opposite to one another.

4. Method according to Claim 3, **characterized in that** the door or hatch (1) is only automatically opened or closed if the key (6) is detected after the movement toward and before the backward movement.

5. Method according to Claim 3 or 4, **characterized in that**, after the movement toward, an optical and/or an acoustic notification is output if the key (6) is detected.

6. Method according to Claim 3, **characterized in that** the door or hatch (1) is only automatically opened or closed if the key (6) is detected after the movement toward and the backward movement.

7. Device for actuating a door or hatch of a vehicle, the device (12) comprising a mechanism (3) for actuating the door or hatch (1), at least two sensor arrangements, which are spaced apart from one another, each having at least one sensor (4; 5), and control means (2; 21; 21, 22; 21, 22, 15),
the control means (2; 21; 21, 22; 21, 22, 15) are designed in such a manner that the control means (2; 21; 21, 22; 21, 22, 15), by means of the mechanism (3), open the door or hatch (1) if it is closed or close it if it is open, if, via the two sensor arrangements (4, 5), a movement of an object having at least one direction change is detected outside the vehicle (10) and the control means (2; 21; 21, 22; 21, 22, 15) simultaneously detect a key (6) assigned to the vehicle (10), and
the device is **characterized in that** the device (12) is designed in such a manner that the device (12) only automatically opens the door or hatch (1) if the control means (2) detect that a field strength, which is generated by a signal emitted from the key (6) in the vehicle (10), has fallen below a predetermined threshold value within a predetermined time span after the detection of the movement.

8. Device for actuating a door or hatch of a vehicle, the device (12) comprising a mechanism (3) for actuating the door or hatch (1), at least two sensor arrangements, which are spaced apart from one another, each having at least one sensor (4; 5), and control means (2; 21; 21, 22; 21, 22, 15),
the control means (2; 21; 21, 22; 21, 22, 15) are designed in such a manner that the control means (2; 21; 21, 22; 21, 22, 15), by means of the mechanism (3), open the door or hatch (1) if it is closed or close it if it is open, if, via the two sensor arrangements (4, 5), a movement of an object having at least one direction change is detected outside the vehicle (10) and the control means (2; 21; 21, 22; 21, 22, 15) simultaneously detect a key (6) assigned to the vehicle (10), and
the device is **characterized in that** the device (12) is designed in such a manner that the device (12) only automatically closes the door or hatch (1) if the control means (2) detect that a field strength, which is generated by a signal emitted from the key (6) in the vehicle (10), has fallen below a predetermined threshold value within a predetermined time span after the detection of the movement.

9. Device according to Claim 7 or 8,
**characterized in that** at least one of the at least two sensor arrangements (4, 5) has an oblong shape, and,
of the at least two sensor arrangements, at least two sensor arrangements (4, 5) are arranged essentially parallel to one another.

10. Device according to one of Claims 7-9,
**characterized in that** the control means comprise a first sensor analysis unit (21) and at least one second sensor analysis unit (22),
the first sensor analysis unit (21) is electrically connected to one sensor (5) of the at least two sensors,
each of the at least one second sensor analysis units (22) is electrically connected to one sensor (4) of the respective other of the at least two sensors,
each of the at least one second sensor analysis units (22) is electrically connected to the first sensor analysis unit (21), and
the first sensor analysis unit (21) has a master function and the at least one second sensor analysis unit (22) has a slave function.

11. Device according to one of Claims 7-10,
**characterized in that** the control means comprise a first sensor analysis unit (21) and a second sensor analysis unit (22),
the first sensor analysis unit (21) is electrically connected to one sensor arrangement (5) of the two sensor arrangements,
the second sensor analysis unit (22) is electrically connected to the other sensor arrangement (4) of the two sensor arrangements,
the first sensor analysis unit (21) and the second sensor analysis unit (22) are electrically connected to one another, and
the first sensor analysis unit (21) and the second sensor analysis unit (22) each have a master function with equal status.

12. Device according to Claim 10 or 11, **characterized in that** the control means comprise at least one monitoring unit (15), which comprises an analysis function for analyzing the at least two sensors (4, 5) and a control function for activating the mechanism (3), and each sensor analysis unit (21; 21, 22), which has a master function, is electrically connected to the at least one monitoring unit (15).

13. Vehicle having a device (12) according to one of Claims 7-12.

14. Vehicle according to Claim 13, **characterized in that** the at least two sensor arrangements (4; 5) extend essentially in the width direction of the vehicle (10) centrally in the rear area of the vehicle (10), and the at least two sensor arrangements (4, 5) are oriented essentially parallel to a roadway and toward the roadway.

15. Vehicle according to Claim 13 or 14, **characterized in that** one (4) of the at least two sensor arrangements extends in the longitudinal direction of the vehicle (10) in front of an opening (8) for a trailer hitch of the vehicle (10), and
a further (5) of the at least two sensor arrangements extends in the longitudinal direction behind the opening (8) for the trailer hitch.

## Revendications

1. Procédé pour actionner une portière ou un capot d'un véhicule, la portière ou le capot (1), lorsqu'il est fermé, étant ouvert automatiquement ou alors la portière ou le capot (1), lorsqu'il est ouvert, étant fermé automatiquement quand :
* un mouvement d'un objet avec au moins un changement de direction est détecté à l'extérieur du véhicule (10) et
* une clé (6) associée au véhicule (10) est détectée simultanément,
et le procédé est **caractérisé en ce**
**que** la portière ou le capot (1) n'est ouvert automatiquement que lorsque l'intensité d'un champ qui est généré dans le véhicule (10) par un signal émis depuis la clé (6) a chuté au-dessous d'une valeur de seuil prédéfinie pendant un intervalle de temps prédéfini après la détection du mouvement.

2. Procédé pour actionner une portière ou un capot d'un véhicule, la portière ou le capot (1), lorsqu'il est fermé, étant ouvert automatiquement ou alors la portière ou le capot (1), lorsqu'il est ouvert, étant fermé automatiquement quand :
* un mouvement d'un objet avec au moins un changement de direction est détecté à l'extérieur du véhicule (10) et
* une clé (6) associée au véhicule (10) est détectée simultanément,
et le procédé est **caractérisé en ce**
**que** la portière ou le capot (1) n'est fermé automatiquement que lorsque l'intensité d'un champ qui est généré dans le véhicule (10) par un signal émis depuis la clé (6) a chuté au-dessous d'une valeur de seuil prédéfinie pendant un intervalle de temps prédéfini après la détection du mouvement.

3. Procédé selon la revendication 1 ou 2, **caractérisé en ce que** le mouvement est détecté lorsqu'un premier mouvement de l'objet et ensuite, pendant un intervalle de temps prédéfini, un deuxième mouvement de l'objet est détecté, le premier mouvement et le deuxième mouvement étant pour l'essentiel en sens inverse l'un par rapport à l'autre.

4. Procédé selon la revendication 3, **caractérisé en ce que** la portière ou le capot (1) n'est ouvert ou fermé automatiquement que si la clé (6) est détectée après le mouvement d'aller et avant le mouvement de recul.

5. Procédé selon la revendication 3 ou 4, **caractérisé en ce qu'**une notification visuelle et/ou sonore est délivrée après le mouvement d'aller lorsque la clé (6) est détectée.

6. Procédé selon la revendication 3, **caractérisé en ce que** la portière ou le capot (1) n'est ouvert ou fermé automatiquement que si la clé (6) est détectée après le mouvement d'aller et de recul.

7. Dispositif pour actionner une portière ou un capot d'un véhicule, le dispositif (12) comprenant un mécanisme (3) pour actionner la portière ou le capot (1), au moins deux arrangements de détection espacés l'un de l'autre avec à chaque fois au moins un capteur (4 ; 5) et des moyens de commande (2 ; 21 ; 21, 22 ; 21, 22, 15),
les moyens de commande (2 ; 21 ; 21, 22 ; 21, 22, 15) étant configurés de telle sorte que les moyens de commande (2 ; 21 ; 21, 22 ; 21, 22, 15), au moyen du mécanisme (3), ouvrent la portière ou le capot (1) lorsqu'il est fermé ou le ferment lorsqu'il est ouvert quand un mouvement d'un objet avec au moins un changement de direction est détecté à l'extérieur du véhicule (10) par le biais des deux arrangements de détection (4, 5) et les moyens de commande (2 ; 21 ; 21, 22 ; 21, 22, 15) détectent simultanément une clé (6) associée au véhicule (10),
et le dispositif est **caractérisé en ce**
**que** le dispositif (12) est configuré de telle sorte que le dispositif (12) n'ouvre automatiquement la portière ou le capot (1) que lorsque les moyens de commande (2) détectent que l'intensité d'un champ qui est généré dans le véhicule (10) par un signal émis depuis la clé (6) a chuté au-dessous d'une valeur de seuil prédéfinie pendant un intervalle de temps prédéfini après la détection du mouvement.

8. Dispositif pour actionner une portière ou un capot d'un véhicule, le dispositif (12) comprenant un mécanisme (3) pour actionner la portière ou le capot (1), au moins deux arrangements de détection espacés l'un de l'autre avec à chaque fois au moins un capteur (4 ; 5) et des moyens de commande (2 ; 21 ; 21, 22 ; 21, 22, 15),
les moyens de commande (2 ; 21 ; 21, 22 ; 21, 22, 15) étant configurés de telle sorte que les moyens de commande (2 ; 21 ; 21, 22 ; 21, 22, 15), au moyen du mécanisme (3), ouvrent la portière ou le capot (1) lorsqu'il est fermé ou le ferment lorsqu'il est ouvert quand un mouvement d'un objet avec au moins un changement de direction est détecté à l'extérieur du véhicule (10) par le biais des deux arrangements de détection (4, 5) et les moyens de commande (2 ; 21 ; 21, 22 ; 21, 22, 15) détectent simultanément une clé (6) associée au véhicule (10),
et le dispositif est **caractérisé en ce**
**que** le dispositif (12) est configuré de telle sorte que le dispositif (12) ne ferme automatiquement la portière ou le capot (1) que lorsque les moyens de commande (2) détectent que l'intensité d'un champ qui est généré dans le véhicule (10) par un signal émis depuis la clé (6) a chuté au-dessous d'une valeur de seuil prédéfinie pendant un intervalle de temps prédéfini après la détection du mouvement.

9. Dispositif selon la revendication 7 ou 8, **caractérisé en ce que** parmi les au moins deux arrangements de détection (4, 5), au moins un présente une forme allongée et **en ce que** parmi les au moins deux arrangements de détection, au moins deux arrangements de détection (4, 5) sont disposés essentiellement en parallèle l'un par rapport à l'autre.

10. Dispositif selon l'une des revendications 7 à 9, **caractérisé en ce**
**que** les moyens de commande comprennent une première unité d'interprétation de capteur (21) et au moins une deuxième unité d'interprétation de capteur (22),
**que** la première unité d'interprétation de capteur (21) est reliée électriquement avec un capteur (5) des au moins deux capteurs,
**que** chacune des au moins une deuxième unité d'interprétation de capteur (22) est reliée électriquement à chaque fois avec un capteur (4) de l'autre des au moins deux capteurs,
**que** chacune des au moins une deuxième unité d'interprétation de capteur (22) est reliée électriquement avec la première unité d'interprétation de capteur (21), et
**que** la première unité d'interprétation de capteur (21) présente une fonction maître et l'au moins une deuxième unité d'interprétation de capteur (22) une fonction esclave.

11. Dispositif selon l'une des revendications 7 à 10, **caractérisé en ce**
**que** les moyens de commande comprennent une première unité d'interprétation de capteur (21) et une deuxième unité d'interprétation de capteur (22),
**que** la première unité d'interprétation de capteur (21) est reliée électriquement avec un arrangement de détection (5) des deux arrangements de détection,
**que** la deuxième unité d'interprétation de capteur (22) est reliée électriquement avec l'autre arrangement de détection (4) des deux arrangements de détection,
**que** la première unité d'interprétation de capteur (21) et la deuxième unité d'interprétation de capteur (22) sont reliées électriquement entre elles, et
**que** la première unité d'interprétation de capteur (21) et la deuxième unité d'interprétation de capteur (22) présentent respectivement une fonction maître possédant les mêmes droits.

12. Dispositif selon la revendication 10 ou 11, **caractérisé en ce que** les moyens de commande comprennent au moins une unité de contrôle (15) qui inclut une fonction d'interprétation pour interpréter les au moins deux capteurs (4, 5) et une fonction de commande pour commander le mécanisme (3) et **en ce que** chaque unité d'interprétation de capteur (21 ; 21, 22) qui présente une fonction maître est reliée électriquement avec l'au moins une unité de contrôle (15).

13. Véhicule équipé d'un dispositif (12) selon l'une des revendications 7 à 12.

14. Véhicule selon la revendication 13, **caractérisé en ce que** les au moins deux arrangements de détection (4, 5) s'étendent pour l'essentiel dans le sens de la largeur du véhicule (10) au centre dans la zone arrière du véhicule (10) et **en ce que** les au moins deux arrangements de détection (4, 5) sont orientés pour l'essentiel parallèlement à une chaussée et en direction de la chaussée.

15. Véhicule selon la revendication 13 ou 14, **caractérisé en ce que** l'un (4) des au moins deux arrangements de détection s'étend dans le sens longitudinal du véhicule (10) devant une ouverture (8) pour un accouplement de remorque du véhicule (10) et **en ce qu'**un autre (5) des au moins deux arrangements de détection s'étend dans le sens longitudinal derrière l'ouverture (8) pour l'accouplement de remorque.
